(19) Europäisches Patentamt
European Patent Office
Office européen des brevets

(11) **EP 4 672 642 A1**

(12) **EUROPEAN PATENT APPLICATION**

(43) Date of publication:
**31.12.2025 Bulletin 2026/01**

(21) Application number: **24184943.9**

(22) Date of filing: **27.06.2024**

(51) International Patent Classification (IPC):
**H04B 17/318** (2015.01)   **H04L 5/00** (2006.01)
**H04B 7/08** (2006.01)   **H04L 25/02** (2006.01)

(52) Cooperative Patent Classification (CPC):
**H04B 17/328; H04L 5/005; H04L 25/0212;
H04L 25/0254; H04L 25/0256;** H04B 7/08;
H04L 25/0204

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **INTEL Corporation
Santa Clara, CA 95054 (US)**

(72) Inventors:
• **HEWAVITHANA, Thushara
Tempe, 85284 (US)**
• **TETZLAFF, Thomas
Portland, 97209 (US)**

• **WHINNETT, Nicholas
Bath, BA1 7BA (GB)**
• **CHOI, Yang-Seok
Portland, 97229 (US)**
• **VANAPARTHY, Santhosh
Santa Clara, 95054 (US)**
• **SCHRECK, Jan
Scotts Valley, 95066 (US)**
• **DHAKAL, Sagar
Belmont, 94002 (US)**
• **YAO, Shuang
Beaverton, 97003 (US)**

(74) Representative: **Viering, Jentschura & Partner
mbB
Patent- und Rechtsanwälte
Am Brauhaus 8
01099 Dresden (DE)**

(54) **RECEIVER, METHOD FOR ESTIMATING A POWER DELAY PROFILE AND METHOD FOR PERFORMING CHANNEL ESTIMATION**

(57) According to various examples, a receiver is described, comprising a memory and a processor, the processor being configured to receive, for each of a plurality of receive antennas, a pilot signal via the receive antenna, wherein the pilot signal has a component for each subcarrier of a plurality of subcarriers, generate, for each of the plurality of receive antennas, an intermediate power delay profile estimation processing result by processing the pilot signal received via the receive antenna by one or more first neural network layers combining the components of the pilot signal received via the receive antenna for the sub-carriers, generate a combined intermediate power delay profile estimation processing result by combining the intermediate power delay profile estimation processing results generated for the receive antennas and determine a power delay profile estimate by processing the combined intermediate power delay profile processing estimation result by one or more second neural network layers.

FIG 9

901 Receive, for each of a plurality of receive antennas, a pilot signal over the receive antenna, wherein the pilot signal has a component for each subcarrier of a plurality of subcarriers

902 Generate, for each of the plurality of receive antennas, an intermediate power delay profile estimation processing result by processing the pilot signal received via the receive antenna by one or more first neural network layers combining the components of the pilot signal received via the receive antenna for the sub-carriers

903 Generate a combined intermediate power delay profile estimation processing result by combining the intermediate power delay profile estimation processing results generated for the receive antennas

904 Determine a power delay profile estimate by processing the combined intermediate power delay profile processing estimation result by one or more second neural network layers

EP 4 672 642 A1

## Description

### Technical Field

Exemplary implementations described herein generally relate to receivers, methods for estimating power delay profiles and methods for performing channel estimation.

### Background

In a wireless communication system, in particular a multiple input multiple output (MIMO) system, performing channel estimation is typically required to achieve high communication efficiency. To do this, a pilot signal is processed to estimate a power delay profile and based on the estimated power delay profile, filtering of the pilot signal is performed to determine a channel estimate. Efficient approaches for performing channel estimation, including in particular power delay profile estimation, are desirable.

### Brief Description of the Drawings

In the drawings, like reference characters generally refer to the same parts throughout the different views. The drawings are not necessarily to scale, emphasis instead generally being placed upon illustrating the principles of the present disclosure. In the following description, various aspects are described with reference to the following drawings, in which:

Figure 1 shows a communication arrangement according to various aspects of this disclosure.
Figure 2 illustrates power delay profile (PDP) estimation using a neural network with a symmetric interference approach.
Figure 3 illustrates PDP estimation using a neural network with an asymmetric interference approach.
Figure 4 illustrates a look-up table (LUT) based channel estimation.
Figure 5 illustrates PDP clustering.
Figure 6 shows an illustration of the symmetry of a matrix of filter coefficients.
Figure 7 illustrates channel correlation matrix eigenvector symmetry.
Figure 8 shows a diagram indicating the eigenvalues for an exemplary channel correlation matrix.
Figure 9 shows a flow diagram illustrating a method for estimating a power delay profile of a wireless channel.
Figure 10 shows a flow diagram illustrating a method for channel estimation of a wireless channel.

### Description of Exemplary Implementations

The following detailed description refers to the accompanying drawings that show, by way of illustration, specific details and aspects of this disclosure in which aspects of the present disclosure may be practiced. Other aspects may be utilized, and structural, logical, and electrical changes may be made without departing from the scope of the present disclosure. The various aspects of this disclosure are not necessarily mutually exclusive, as some aspects of this disclosure can be combined with one or more other aspects of this disclosure to form new aspects.

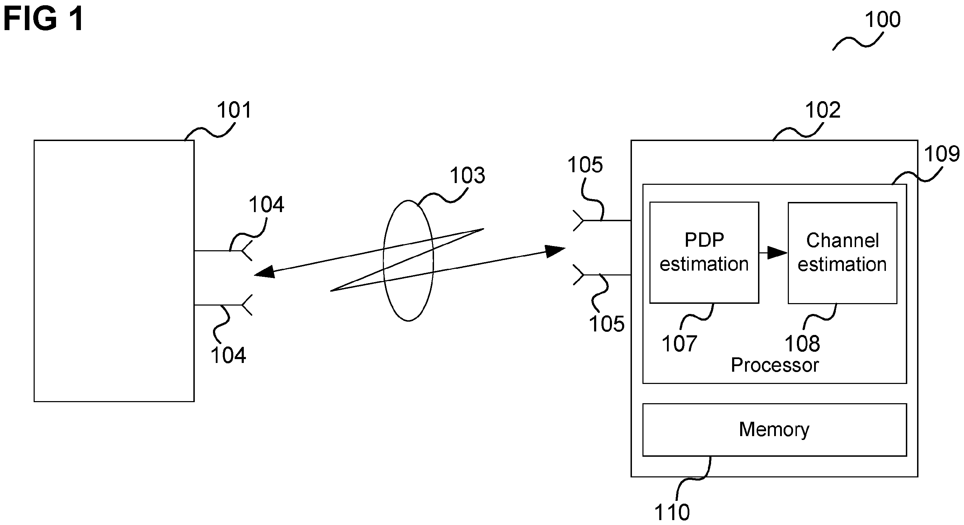

Figure 1 shows a communication arrangement 100 according to various aspects of this disclosure.

A transmitter 101 sends radio signals via a wireless channel 103 to a receiver 102. The transmitter 101 has one or more transmit antennas 104 and the receiver 102 has one or more receive antennas 105. When there are multiple transmit antennas 104 and multiple receive antennas 105 the resulting communication system is denoted as MIMO (multiple input multiple output) system.

The transmitter 101 in particular transmits a pilot signal via the wireless channel which allows the receiver 102 to perform channel estimation, i.e. determine an estimate $\hat{H}$ of the channel matrix $H$ which specifies characteristics of the wireless channel 103.

For determining $\hat{H}$, the receiver 102 first determines the power delay profile (PDP) of the wireless channel 103. It should be noted that the power delay profile of a wireless channel 103 is required for many applications in a receiver (e.g. a wireless modem) such as channel estimation (as in the present example), timing offset estimation and delay spread estimation, etc.

Neural networks, in particular domain knowledge enhanced Neural Networks (DKE-NN) can provide a near-optimal estimate of a PDP (when trained accordingly).

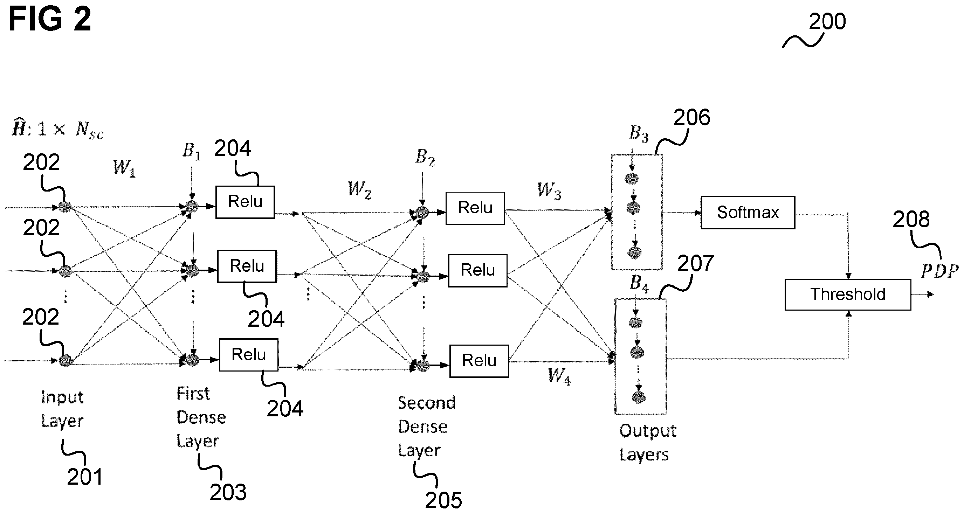

Figure 2 illustrates PDP estimation using a DKE-NN 200 with a symmetric interference approach.

The DKE-NN 200 has an input layer 201 which has an input node 202 for each subcarrier used to transmit a pilot signal, i.e. each input node 202 receives a pilot signal component (of the pilot signal) transmitted via a respective (pilot) subcarrier (wherein the pilot signal as received is altered with respect to the pilot signal as sent by the channel matrix (plus noise)). A first dense layer 203 (including ReLU activation functions 204) processes the pilot signal components (and combines them). The results (which can be seen as features in a feature space) are further processed by at least sone second dense layer 205 (combining features to generate new features and including further ReLU activation functions) until the resulting features are finally supplied to one or more output layers 206, 207 whose outputs are used to generate a PDP estimate 208. In this example, there is a first output layer 206 and a second output layer 207, wherein a softmax function processes the output of output layer 206 and the receiver 102 uses the outputs of the second output layer 207 to threshold the softmax output to generate the PDP estimate (including receive powers for different delays).

In figure 2, $N_{SC}$ denotes the number of pilot subcarriers, $W_i$ denotes the weight matrix of the ith layer and $B_i$ denotes the bias vector of the ith layer.

The approach of figure 2 illustrates PDP estimation for a single receive antenna 105. When there are multiple receive antennas 105, using the approach of figure 2, the receiver 102 estimates the PDP separately for each of the N receive antennas 105 which each have their own version of the received pilot signal. As such, the receiver 102 performs inference for each of these estimates through all layers of the neural network 200. This is referred to as Symmetric Inference in the following since inference may be seen to be performed symmetrically. However, in a massive MIMO system with a large number of (at least receive) antennas, i.e. N >> 1, this can incur a large computational complexity since the computational complexity in estimating the PDP grows linearly with the number of receive antennas 105, thereby requiring many computation cores.

In view of the above, according to various aspects of this disclosure, an approach to perform inference for PDP estimation, referred to as an asymmetric inference, is provided. In includes splitting DKE-NN layers into multiple sub-sets such that for a given number of observations (i.e. receptions via multiple receive antennas 105) different sub-sets perform a different number of inferences. For example, DKE-NN layers can be split into two sub-sets, where the first sub-set performs one inference per observation of the pilot signal (i.e. per receive antenna 105, i.e. pilot signal components received by different receive antennas 105 are treated separately), while the second sub-set (following the first sub-set according to various aspects of this disclosure) performs inference over all observations (i.e. a common inference for all receive antennas). In this way, the computation required for the second sub-set of DKE-NN is independent from the number of observations (i.e. receive antennas). Thus, PDP estimation can be performed at relatively low computational complexity using asymmetric inference with a DKE-NN in a massive MIMO system.

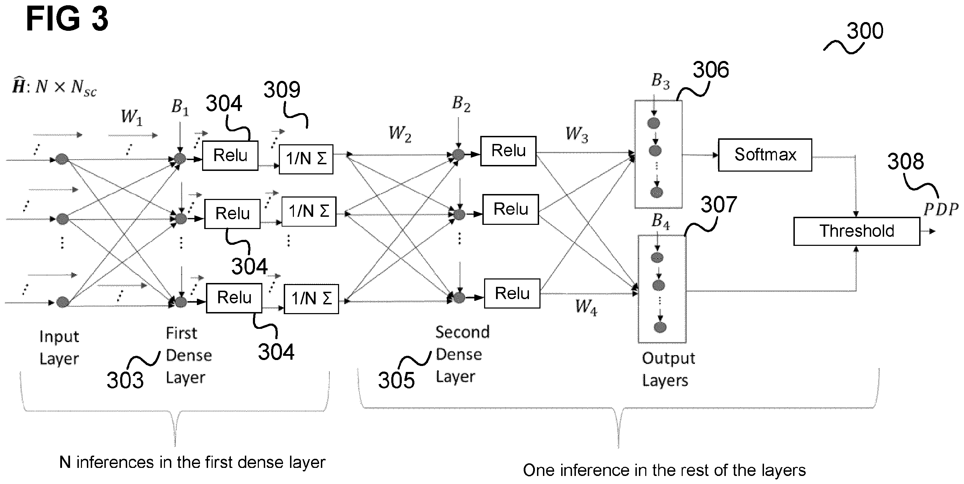

More specifically, to apply a DKE-NN in a MIMO system, multiple inferences for multiple observations are performed (one inference per observation) in the earlier layers of the neural network to extract relevant features and one or more of those relevant features are combined at one or more combining points (which can be in the following layers) within the DKE-NN. Using the combined features, fewer inferences (one inference per multiple observations) are performed in the later layers. An example for such a DKE-NN is shown in figure 3.

Figure 3 illustrates PDP estimation using a DKE-NN 300 with an asymmetric interference approach.

The DKE-NN 300 includes a first dense layer 303 (including ReLU activation functions 304) which processes the pilot signal components (and combines them), wherein it treats the observations (in other words the received components received via different receive antennas 105 (of a number N>1) separately from one another (as indicated by the three dots)).

So, the versions of the received pilot signals from different receive antennas 105 are passed simultaneously to the neural network and the receiver 102 performs inference in the first dense layer 303 separately on the received signal of each antenna (i.e. per observation).

For example, the first dense layer 303 corresponds to N layers of the first dense layer 201 of the DKE-NN 200 of figure 2. However, in contrast to figure 2, the ReLU activation functions 304 of the first dense layer 303 are followed by a combination layer 309 which combines the results of the first dense layer 301 over the receive antennas 105, e.g. averages each feature (which the first dense layer for example generates for each receive antenna and for each of a plurality of feature outputs (i.e. output nodes or "output channels") of the first dense layer) over the receive antennas 105. It should be noted that the first dense layer may have a feature output for each subcarrier but it may also have a higher number or lower than of feature outputs than the number of subcarriers.

The output of the combination layer 309 has thus a dimension similar to the output of the first dense layer 201 of the DKE-NN 200 of figure 2 and may thus be processed by a second dense layer 305 and output layers 306, 307 to generate a PDP estimate 308 similar to the second dense layer 205 and the output layers 206, 207 of the DKE-NN 200 of figure 2.

It should be noted that to apply DKE-NN with an asymmetric interference approach, like the DKE-NN in figure 300, the computation may be split by performing the computation of the earlier layers (first dense layer 301 in the example of figure 3) at a first computing node (e.g. by a first device), which could for example be stationed at radio unit (RU), and computation of the later layers (second dense layer in the example of figure 3) at a second computing node, which could be stationed at distributed unit (DU)

The asymmetric interference approach can be seen to be based on the observation that the PDP outputs from different antennas are statistically similar as the underlying channel statistics is wide sense stationary within one OFDM symbol.

By performing the output combination after the activation functions 304 the receiver 102 performs feature extraction (in the first dense layer 301) independently for each observation. Although the received pilot signal across multiple antennas (i.e. multiple observations) are numerically disparate, the underlying latent feature across all observations can be assumed to be the same (or at least similar) due to the stationarity property of the channel. Therefore, combining across multiple observations can be performed in the feature space (e.g. latent space), i.e. after the activation functions 304 (rather than before). It can be shown that performance of both approaches (symmetric and asymmetric) is nearly the same, but the asymmetric inference approach has a much lower computational complexity. Table 1 gives a multiplication complexity comparison for a number $N_i$ of nodes in the ith dense layer.

Table 1

| Multiplication cost for inference across all antennas (N) | Number of multiplications for first dense layer | Number of multiplications for Layer i (i≥ 2) |
|---|---|---|
| Symmetric Inference | $N \times 2 \times N_{SC} \times N_1$ | $N \times N_{i-1} \times N_i$ |
| Asymmetric Inference | $N \times 2 \times N_{SC} \times N_1$ | $1 \times N_{i-1} \times N_i$ |

It should be noted that even though Figure 3 depicts the combination of signals at the end of the first dense layer 301, the asymmetric interference approach can be more general. That is, depending on the application and performance requirements, it is possible to combine the outputs after passing through multiple neural (first) network layers instead of just one (dense) layer.

Moreover, while figure 3 illustrates the combination of outputs at the end of the first dense layer 301 by a simple average, also more complicated combinations may be done such as a weighted averaging to account for different signal powers of different receive antennas 105.

When the PDP has been estimated, e.g. by a PDP estimation block (PDP estimator) 107 of the receiver 102, channel estimation may be performed using the PDP estimate, e.g. by a channel estimation block (channel estimator) 108 of the receiver 102. The PDP estimation block 107 and the channel estimation block 108 are for example implemented by a processor 109 which processes data and performs instructions stored in a memory 110. Typically, the receiver 102 performs channel estimation before symbol detection for equalizing the time-varying and frequency-selective nature of the wireless channel 103. Linear minimum mean-squared error (LMMSE) channel estimation offers the best linear estimate that minimizes the channel estimation error in the mean-squared error sense, but it involves matrix inversion which is computation intensive which is especially relevant for online LLMSE channel estimation.

In view of the above, according to various aspects of this disclosure, a look-up table (LUT) based LMMSE channel estimation approach is provided where the online matrix inversion is avoided.

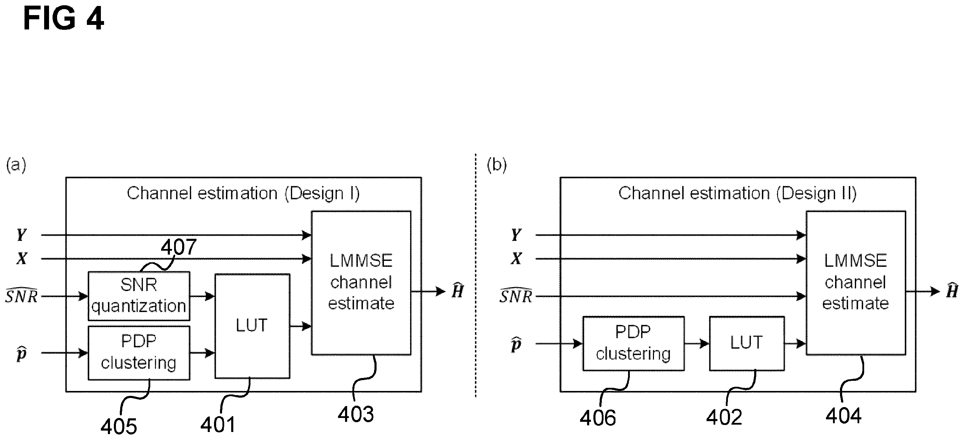

Figure 4 illustrates a LUT based LMMSE channel estimation.

For this, configuring the receiver 102 includes building a LUT 401, 402 for a pre-defined set of PDPs (e.g. representing a respective PDP range) that enables a good trade-off between channel estimation accuracy and LUT size.

According to various aspects of this disclosure (referred to as design I in the following, see left hand side of figure 4), the LUT 401 directly stores the LMMSE filter coefficients for a set of pre-defined combinations of PDP (of the predefined set of PDPs) and signal-to-noise ratio (SNR), which are used to calculate LMMSE channel estimate 403. In various aspects of this disclosure (referred to as design II in the following, see right hand side of figure 4), the LUT 402 stores the eigenvectors and eigenvalues of the channel correlation matrix corresponding to the PDPs of the pre-defined PDPs, which can be used to calculate LMMSE channel estimate 404 on-the-fly without requiring online matrix inversion. In any case, the LUT associates PDPs (and thus the PDP ranges represented by them) with channel estimation filter coefficients.

For both designs, there are four inputs, where X is the pilot signal, Y is the received pilot signal, $\hat{p}$ is the estimated PDP, and $\widehat{SNR}$ is the estimated signal-to-noise ratio. The output $\hat{H}$ is the channel estimation (i.e. the estimate of the channel matrix, see above). Here, the signal waveform is assumed to be an orthogonal frequency division multiplex (OFDM) waveform, e.g. as adopted in 5G NR (fifth generation new radio), and X, Y, and $\hat{H}$ are in frequency domain. For both designs, the receiver 102 maps the estimated PDP $\hat{p}$, which can take arbitrary form and thus the number of possible PDPs is practically infinite, first to a PDP cluster (PDP clustering 405, 406) of a limited number of PDP clusters into which all possible PDPs are clustered. Within each PDP cluster, configuring the receiver 102 includes selecting one PDP which represents the cluster and building the LUT based on these selected PDPs (i.e. the values that the LUT associates with the PDP cluster are determined from the PDP which represents the PDP cluster). As mentioned above, the specific content of the LUT 401, 402 is different for the two designs (design I and design II), as explained in more detail in the following.

In design I, the LUT 401 directly saves the LMMSE filter coefficients according to the following equation (1):

$$\widehat{W} = \left(\widehat{R} + n_0 I\right)^{-1} \widehat{R} \qquad (1)$$

where $\hat{R}$ is the channel correlation matrix that can be derived from the PDP (i.e. in the present case the PDP which represents the PDP cluster for which the LLMSE filter coefficients are determined to put it in the LUT 401 for that PDP cluster) and $n_0$ is the noise power. The channel estimation 403 then calculates $\hat{H} = \hat{W} Y / X$. Accordingly, both the PDP cluster (specifically the PDP which represents it) and the SNR are used, as a pair, to index the LUT 401. To this end, apart from limiting the number of PDPs to the ones representing the PDP clusters, the number of SNRs is also limited via quantization 407. In various aspects of this disclosure, SNR is uniformly quantized. Therefore, the total number of LUT entries is equal to the product of the number of PDP clusters and the number of quantized SNR values (wherein one LUT entry specifies the filter matrix $\hat{W}$ for that PDP cluster and that SNR).

In design II, the LUT 402 saves the eigenvalue and eigenvectors of channel correlation matrix $\hat{R}$. Specifically, denote $\hat{R} = \hat{U}\hat{S}\hat{U}^H$, where $\hat{U}$ and $\hat{S}$ are eigenvectors and eigenvalues, respectively, and the LUT saves $\hat{U}$ and $\hat{S}$ for each $\hat{R}$. The final channel estimation is expressed in Equation (2):

$$\hat{H} = \hat{U} \left(I + \frac{n_0}{\hat{S}} I\right)^{-1} \hat{U}^H Y / X \qquad (2)$$

It should be noted that as $\hat{R}$ does not depend on SNR, only the PDP cluster is an index to the LUT and the number of LUT entries is equal to the number of PDP clusters (into which the possible PDPs are divided).

The above approach, in particular according to design II, avoids that the LUT requires a large memory footprint for exhaustively storing all LMMSE filter coefficients. In both designs the footprint (i.e. memory requirements) can be reduced by a lowering the granularity of the PDP clustering (i.e. using larger PDP clusters).

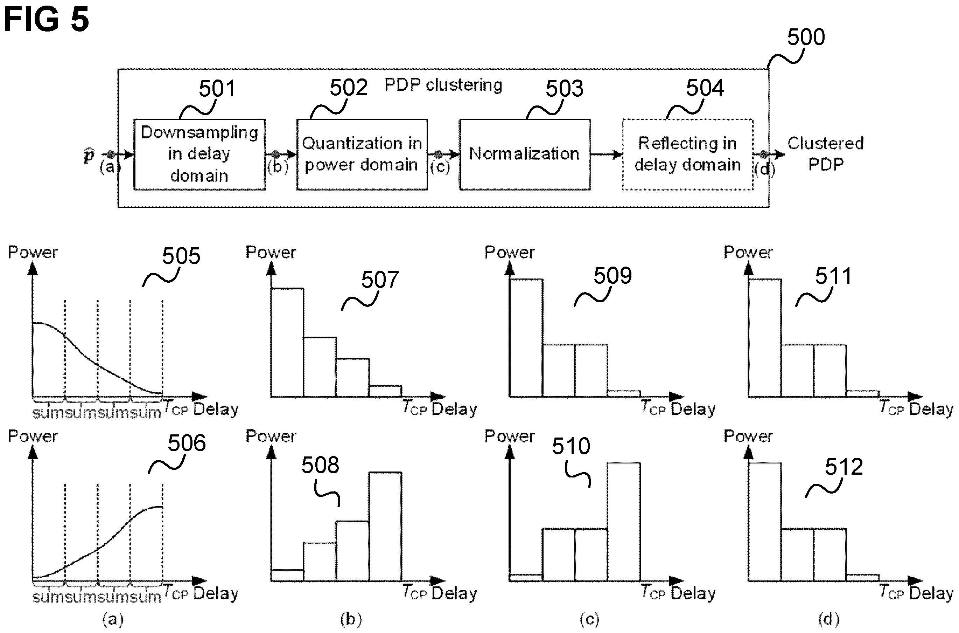

Figure 5 illustrates the PDP clustering 500 (e.g. performed by the channel estimator 108).

As explained above, the input for the PDP clustering 500 is the estimated PDP $\hat{p}$ that can be of arbitrary form, and the output is the PDP representing the PDP cluster to which the PDP estimate maps and whose corresponding $\hat{W}$ or $\hat{U}$ and $\hat{S}$ the LUT 401, 402 stores.

The PDP clustering 500 (or "PDP cluster mapping" since it maps a PDP estimate to a PDP cluster and eventually the representant) includes four processing stages:

(1) Down-sampling in delay domain 501: truncating the PDP estimate at the duration of cyclic prefix (CP) $T_{CP}$ and partitioning the region from 0 to CP into sub-regions of equal length. Calculating the total power of each sub-region and replacing the power profile of each sub-region by a rectangular window spanning over the whole sub-region with a height (i.e., power) equal to the average power of the sub-region.

(2) Quantization in power domain 502: quantizing the power levels of all the delay bins into a finite number of levels using the same quantization levels that are pre-calculated, e.g. using non-uniform quantization for this operation of power domain quantization.

(3) Normalization 503: perform normalization to make the total power of all the bins sum to 1.

(4) (Only for some PDPs) PDP reflection in delay domain 504: reflect the PDP in the delay domain around $T_{CP}/2$.

In Figure 5 two examples for PDP estimates 505, 506, their down-sampling results 507, 508, there quantization results 509, 510 and their normalization and (possibly) reflection results 511, 512 (only the second example includes the reflection 504) are shown.

After (1)-(3), i.e. down-sampling 501, quantization 502 and normalization 503, the numbers of unique PDPs that may occur are finite: let the number of sub-regions in the delay domain be denoted as $D$ and the number of power levels as $P$, then the number of unique PDPs is $P^D - (P - 1)$, and each unique PDP in general has a different $\hat{W}$ or $\hat{R}$. This limited number of PDPs are the PDP cluster representants which index (together with the SNR in case of design I) the LUT 401, 402. A PDP estimate belongs to the PDP range (PDP cluster) represented by the representant in which results when being processed by the PDP clustering 500. Accordingly, processing the PDP estimate by the PDP clustering 500 can also be seen as determining the PDP cluster to which it belongs.

The PDP reflection 504 is to further reduce the number of PDP clusters and the receiver 102 only performs it for some PDPs. It is based on the observation that for two PDPs where one is a reflected version of the other around $T_{CP}/2$, their $\hat{W}$ or $\hat{R}$ are related and can be derived from each other. Specifically, given $\hat{W}$ or $\hat{R}$ of one PDP, $\hat{W}$ of the reflected PDP can be obtained by complex conjugate and Hadamard product, and $\hat{S}$ of the reflected PDP is the same with that of the original PDP and $\hat{U}$ of the reflected PDP can be obtained by complex conjugate and matrix multiplication with a diagonal matrix. Furthermore, the matrix used for Hadamard product, and the diagonal matrix used for matrix multiplication are the same for all PDP pairs and can be pre-calculated to be used in online computation. Therefore, the LUT 401, 402 only needs

to save $\hat{W}$ or $\hat{U}$ and $\hat{S}$ for one of the PDP the two PDPs, while calculating the $\hat{W}$ or $\hat{U}$ and $\hat{S}$ of the reflected PDP online. According to various aspects of this disclosure, considering that larger power is more likely to appear at smaller delay in real-life systems, to reduce online computation to derive $\hat{W}$ or $\hat{U}$ and $\hat{S}$, the PDP whose largest power is located at a delay bin smaller than $T_{CP}/2$ is the LUT table index (and accordingly the LUT 401, 402 saves $\hat{W}$ or $\hat{U}$ and $\hat{S}$ for PDPs of that shape), while its reflected counterpart first needs to be go through the PDP reflection 504 for LUT indexing, and then perform online computation to obtain its own $\hat{W}$ or $\hat{U}$ and $\hat{S}$. Thus, in the examples shown in Figure 5, the receiver 102 uses the PDP normalization output 511 of the first PDP estimate example 505 directly as the clustered PDP for LUT indexing, while for the second PDP estimate example it has to go through delay domain reflection to index the LUT. By grouping every pair of PDPs that are reflected in the delay domain in this manner, the number of PDP clusters reduces to

$$\frac{P^D + P^{D/2}}{2} - (P-1).$$

After defining the PDPs selecting one PDP from each cluster as representant for that PDP cluster, the LUT 401, 402 can be built for these selected PDPs (with the entries as described above, depending on the design). In the following, techniques for reducing the size of the LUT entries are described.

Regarding design I, it can be shown that $\hat{W}$ is not only Hermitian, but also symmetric along the second diagonal. Therefore, to fully determine the elements of $\hat{W}$ of dimension $N \times N$, only $(2 + N) \times N/4$ complex numbers are required.

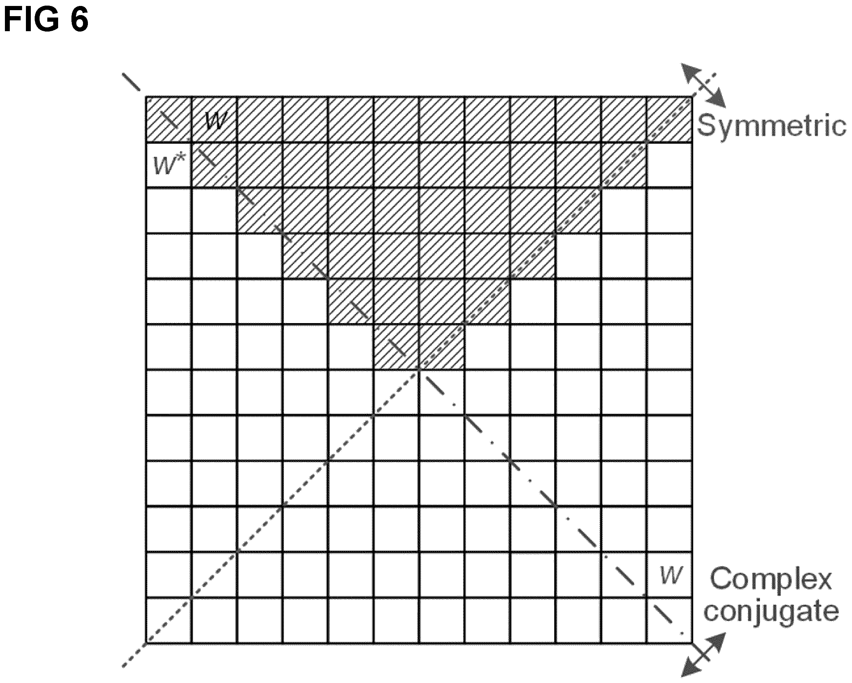

Figure 6 shows an illustration of the symmetry of a $12\times12$ $\hat{W}$ and only the elements shown with hatching are saved in the LUT 401. For example, w* is the complex conjugate of w (which is, due to symmetry, present two times to the upper right of the dash and to line).

During online computation, after loading the elements from the LUT 401, the full size $\hat{W}$ can be obtained (e.g. by the channel estimator 108) by complex conjugate along the first diagonal and reflection along the second diagonal.

Regarding design II, when determining the eigenvectors $\hat{U}$, they are determined up to a complex constant. In other words, $\hat{U}$ are still valid eigenvectors of $\hat{R}$ with eigenvalues of $\hat{S}$ after they are scaled by a complex number. This fact can be combined with the mathematical property that for each unique eigenvalue of $\hat{S}$, complex conjugating and reversing the order of its corresponding eigenvector yields another eigenvector with the same eigenvalue, i.e., both $u_i$ and

$$u_i^*(N:-1:1)$$

are eigenvectors to the same eigenvalue of $\hat{R}$ if the eigenvalue is unique. Thus, for the eigenvectors whose eigenvalues are unique, they can be scaled by a complex number such that they are unchanged after complex conjugating and reversing the order of the elements, i.e.,

$$u_i = u_i^*(N:-1:1)$$

. This means that when an eigenvalue is unique, the eigenvector can be made symmetric such that complex conjugating the reversing the order gives the same eigenvector.

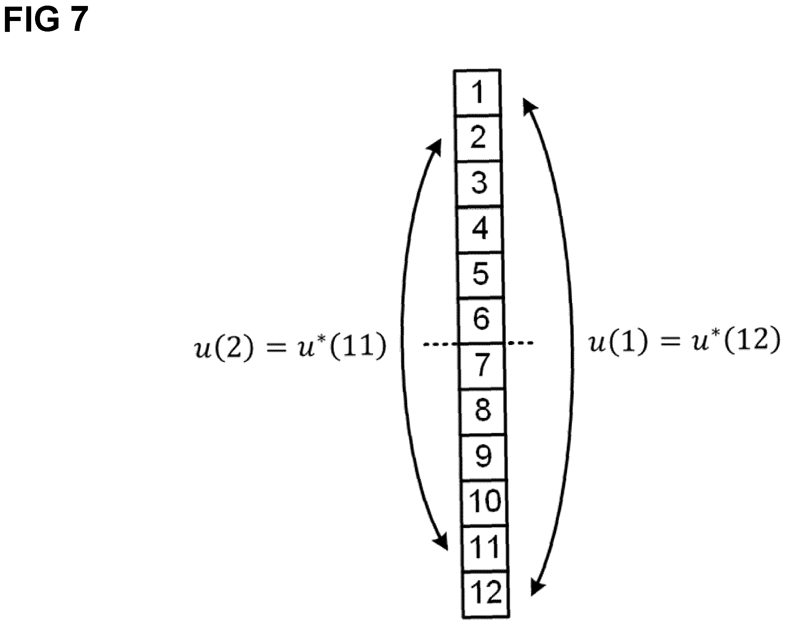

Figure 7 illustrates such symmetry with $N = 12$.

This allows saving only $N/2$ complex numbers for each eigenvector of $\hat{U}$ whose eigenvalue in unique in the LUT.

Another property is that for $\hat{R}$ of dimension $N \times N$, not all eigenvalues have large magnitude.

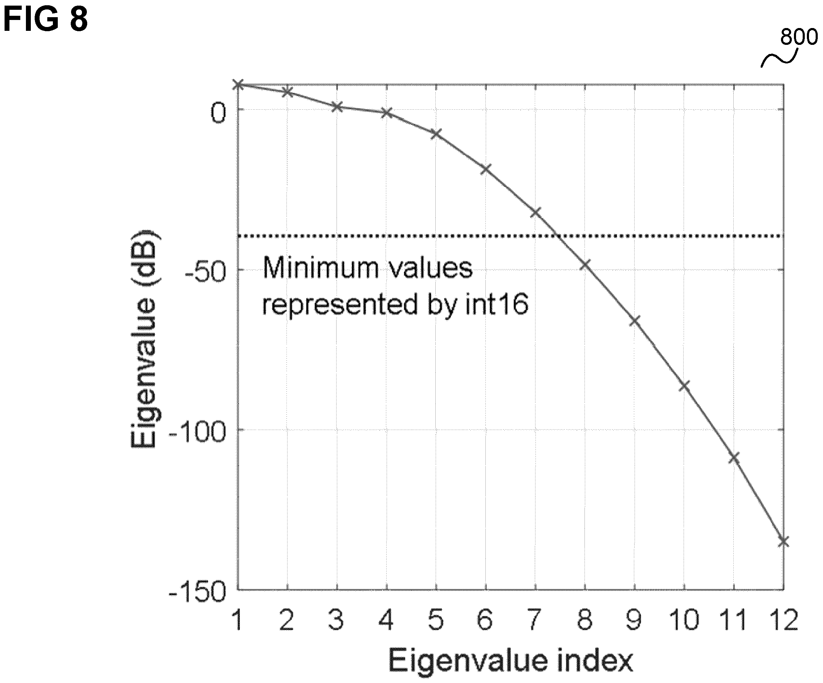

Figure 8 shows a diagram 800 indicating the eigenvalues for an exemplary $\hat{R}$, where the pilot subcarrier spacing is 120 kHz and $N = 12$. The difference between the 8th largest eigenvalue and the 1st largest eigenvalue is more than 50 dB. Furthermore, in real-life deployment, $\hat{S}$ are usually represented in fixed-point format, and small eigenvalues would become 0 after being converted to fixed-point format. Hence, only a smaller set of r (r < N) eigenvalues and eigenvectors need to be saved in the LUT 402. In the example shown in Figure 8, only $r = 7$ eigenvalues and eigenvectors need to be saved in the LUT 402.

An exemplary implementation is as follows: uplink channel estimation using sounding reference signals (SRS). The subcarrier spacing is 30 kHz and the COMB pattern is 4, i.e. the pilot subcarrier spacing is 120 kHz. The number of pilot subcarriers is 24. There are four UEs transmitting on the same pilot subcarriers with different cyclic shifts of the same Zadoff-Chu sequence. $N = 12$ in LMMSE channel estimation. The number of sub-regions in the delay domain $D = 4$, and the number of power levels $P = 4$. The number of quantized SNR values is 5, and they are {-6, 2, 10, 18, 26} dB. This gives rise to 665 entries for the LUT of Design I, and 133 entries for the LUT of Design II. For each entry of the LUT of Design I, 42 complex numbers are saved which can be used to derive $\hat{W}$ of size $12 \times 12$, and the real and imaginary parts of these 42 complex numbers are saved in int8 format. For each entry of the LUT of design II, 7 largest eigenvalues and their corresponding eigenvectors are saved. Moreover, in this example, all these eigenvalues are unique, so only $N/2 = 6$ complex numbers are saved to define each eigenvector. All the eigenvalues are saved in the int16 format, and both real and imaginary parts of the eigenvectors are saved in int8 format.

Table 2 summarizes the LUT size (in terms of MB) and computation complexity (in terms of number of multiplications) of Design I and Design II for the above example.

Table 2

| | Design I | Design II |
|---|---|---|
| Memory of LUT (MB) | 0.0533 | 0.0125 |
| Complexity of on-line computation (Number of multi-plications) | • Apply $\hat{W}$ saved in the LUT to get LMMSE channel estimate: $12 \times 12 = 144$ complex multiplications.<br>• Additionally, 42 complex multiplications are required if $\hat{W}$ saved in the LUT is not for the PDP itself but its reflected counterpart. | • Apply $\hat{U}$ and $\hat{S}$ saved in the LUT to get LMMSE channel estimate: $7 \times 12 + 7 + 12 \times 7 = 175$ complex multiplications and 7 real multiplications.<br>• Additionally, $12 \times 7 = 84$ complex multiplications are required if $\hat{U}$ and $\hat{S}$ saved in the LUT are not for the PDP itself but its reflected counterpart. |

In summary, according to various aspects of this disclosure, a receiver is provided, e.g. the receiver 102 of figure 1, which includes a memory and processor, wherein the processor is configured to

- Receive, for each of a plurality of receive antennas, a pilot signal via the receive antenna, wherein the pilot signal has a component for each subcarrier of a plurality of subcarriers (and thus also the received pilot signal (i.e. the pilot signal as received) has a component for each sub carrier)
- Generate, for each of the plurality of receive antennas, an intermediate power delay profile estimation processing result (e.g. one or extracted features such as an element (e.g. a vector) in a latent space) by processing the pilot signal received via the receive antenna by one or more first neural network layers combining the components of the pilot signal received via the receive antenna for the sub-carriers
- Generate a combined intermediate power delay profile estimation processing result (e.g. combined features) by combining the intermediate power delay profile estimation processing results generated for the receive antennas (e.g. by averaging, weighted averaging etc.; the combined intermediate power delay profile may have multiple components (according to the output dimension of the last one of the one or more first neural network layers)) and
- Determine a power delay profile estimate by processing the combined intermediate power delay profile processing estimation result by one or more second neural network layers.
  and/or
- Receive a pilot signal;
- Estimate a power delay profile of the wireless channel from the received pilot signal;
- Determine a power delay profile range (PDP range or PDP "cluster") to which the estimated power delay profile belongs from a plurality of power delay profile ranges;
- Determine filter information associated with the determined range from a look-up table which associates each power delay profile range (PDP range) of the plurality of power delay profile ranges with respective filter information according to the determined power delay profile range; and
- Filter the pilot signal according to the determined filter information

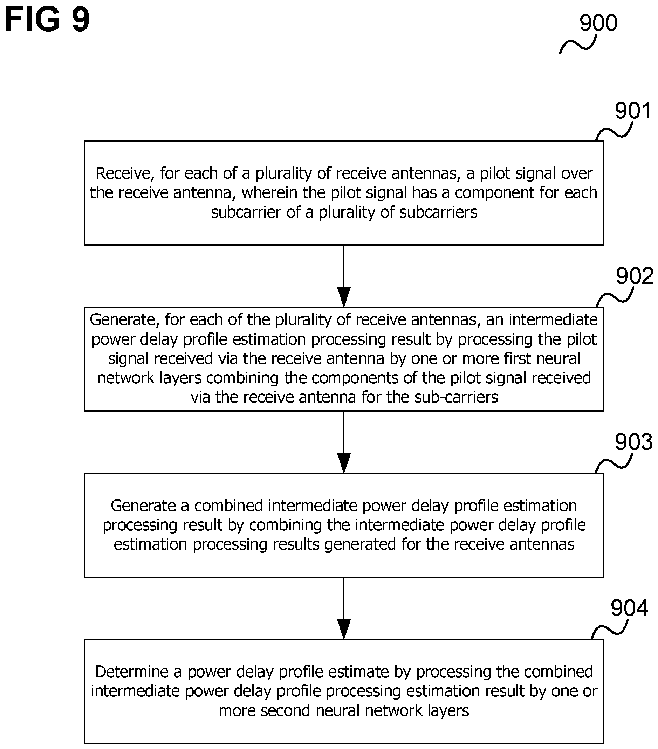

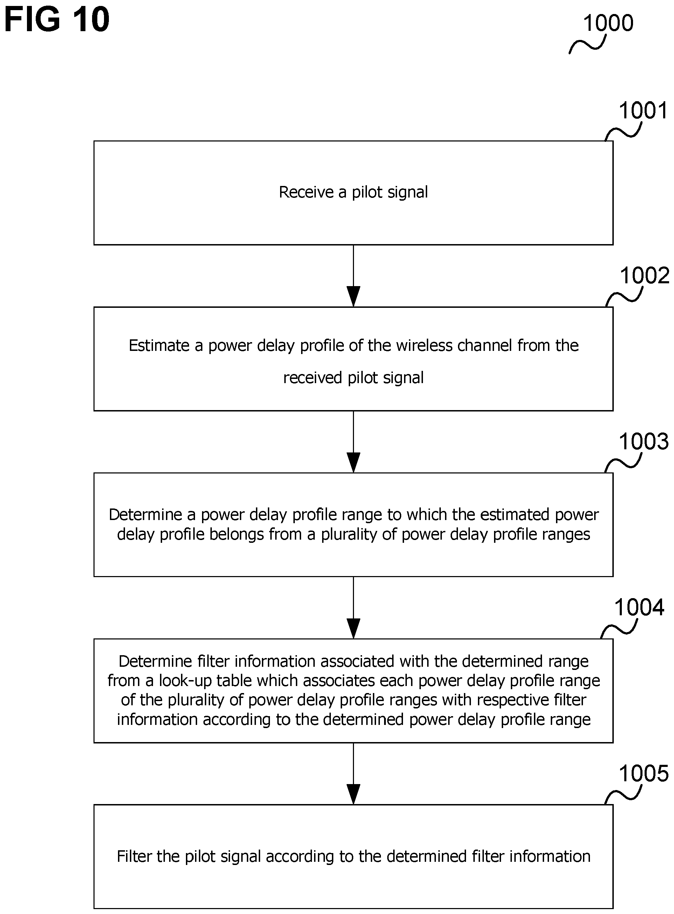

Accordingly, according to various aspects of this disclosure, a receiver (e.g. a receiver such as the receiver 102) performs a method as illustrated in figure 9 and/or as illustrated in figure 10.

Figure 9 shows a flow diagram 900 illustrating a method for estimating a power delay profile of a wireless channel.

In 901, for each of a plurality of receive antennas, the receiver receives a pilot signal via the receive antenna, wherein the pilot signal has a component for each subcarrier of a plurality of subcarriers (and thus also the received pilot signal (i.e. the pilot signal as received) has a component for each sub carrier).

In 902, for each of the plurality of receive antennas, the receiver generates an intermediate power delay profile estimation processing result (e.g. one or extracted features such as an element (e.g. a vector) in a latent space) by processing the pilot signal received via the receive antenna by one or more first neural network layers combining the components of the pilot signal received via the receive antenna for the sub-carriers.

An intermediate power delay profile estimation processing result may be understood as a power delay profile estimation processing result which is a power delay profile estimation processing result at an intermediate stage, i.e. the receiver generates it from the input (by the one or more first neural network layers) but processes it further to get the (final) power delay profile estimation processing result. It can thus be seen to be a result in the processing pipeline after (some) processing of the input but before completing the processing (including processing by one or more second neural network layers). An example for this are features which are extracted from the input and which are further processed to get the power delay profile estimate. A combination of the intermediate power delay profile estimation processing results gives what is referred to as "combined intermediate power delay profile estimation processing result" as follows.

In 903, the receiver generates a combined intermediate power delay profile estimation processing result (e.g. combined features) by combining the intermediate power delay profile estimation processing results generated for the receive antennas (e.g. by averaging, weighted averaging etc.; the combined intermediate power delay profile may have multiple components (according to the output dimension of the last one of the one or more first neural network layers)).

In 904, the receiver generates a power delay profile estimate by processing the combined intermediate power delay profile processing estimation result by one or more second neural network layers.

The neural network layers may be trained, e.g. using supervised training, using training data including, for example, training inputs (including specifications of received pilot signals) and target outputs (i.e. labels for the training inputs, including specifications of PDPs).

Figure 10 shows a flow diagram 1000 illustrating a method for channel estimation of a wireless channel, e.g. performed by a receiver.

In 1001, the receiver receives a pilot signal.

In 1002, the receiver estimates a power delay profile of the wireless channel from the received pilot signal.

In 1003, the receiver determines a power delay profile range (PDP range or PDP "cluster") to which the estimated power delay profile belongs from (i.e. from among) a plurality of (predetermined) power delay profile ranges.

In 1004, the receiver determines filter information associated with the determined range from a look-up table which associates each power delay profile range (PDP range) of the plurality of power delay profile ranges with respective filter information according to the determined power delay profile range.

In 1005, the receiver filters the pilot signal according to the determined filter information.

In the following, various aspects of this disclosure are described which may also be used in combination with each other. Further, they may be combined with any one of the examples (i.e. examples 1 to 27) given below, i.e. according to various aspects of this disclosure, a receiver and/or a method is provided which includes the features of any one of the following aspects and any one of the examples given below.

According to aspect 1, a method to perform LUT-based LMMSE channel estimation is provided. It includes clustering PDPs (i.e. the possible PDP estimates) to index the LUT, wherein all the PDPs within the same cluster share the same LUT entry.

Aspect 2 is a method of aspect 1, wherein the clustering of the estimated PDP utilizes the features in both delay domain and power domain.

Aspect 3 is the method of aspect 2, including, to extract the features in the delay domain and power domain, first down-sampling the estimated PDP in the delay domain, and then quantizing in the power domain.

Aspect 4 is the method of aspect 3, including, to down-sample in the delay domain, truncating the delay at cyclic prefix (CP), partitioning the truncated delay into equal length sub-regions, and utilizing the average power of each sub-region to represent the interval (i.e. PDP range).

Aspect 5 is the method of aspect 3 or 4, including using non-uniform quantization levels to quantize in the power domain.

Aspect 6 is the method of any one of aspects 1 to 5, including putting a pair of two PDPs where one is the reflected image of the other in the delay domain along half of the CP are into the same PDP cluster to share the same LUT entry.

Aspect 7 is the method of aspect 6, including calculating LUT contents based on a major PDP of the pair of two PDPs, where the major PDP is the one that has largest power positioned within the first half of the duration of the CP.

Aspect 8 is the method of aspect 6 or 7, including loading LUT contents of the major PDP of a pair of two PDPs and then computing the minor PDP of the pair by online computation.

Aspect 9 is the method of aspect 8, wherein the online computation involves complex conjugate and Hadamard product or complex conjugate and matrix multiplication.

Aspect 10 is the method of any one of aspects 1 to 9, wherein the LUT saves the least minimum mean-squared error (LMMSE) filter coefficients.

Aspect 11 is the method of any one of aspects 1 to 10, wherein a combination of clustered PDP and quantized SNR indexes the LUT.

Aspect 12 is the method of any one of aspects 1 to 11, wherein the LUT stores a compressed version of a filter matrix and the method includes performing decompression online to get a full-sized version of a filter matrix.

Aspect 13 is the method of aspect 12, wherein the compression extracts elements of the matrix above the first and the second diagonal, and the decompression operation involves complex conjugate and reflection along the first and the second diagonal.

Aspect 14 is the method of any one of aspects 1 to 13, wherein the LUT stores the eigenvalues and eigenvectors of the channel correlation matrix.

Aspect 15 is the method of aspect 14, wherein the LUT stores the eigenvalues and eigenvectors of the channel correlation matrix of a scaled version of the underlying channel.

Aspect 16 is the method of any one of aspects 1, 14 and 15, wherein only the clustered PDP indexes the LUT.

Aspect 17 is the method of any one of aspects 14 and 15, including performing thresholding on eigenvalues and omitting eigenvalues below a threshold as well as the corresponding eigenvectors from the LUT.

Aspect 18 is the method of aspect 17, including performing the eigenvalue thresholding after quantizing eigenvalues to fixed-point format and the threshold is 0 in the fixed-point format.

Aspect 19 is the method of aspects 14 or 15, wherein each eigenvector with a unique eigenvalue, it is conjugate symmetric, i.e., its complex conjugate is equal to its reversal.

Aspect 20 is the method of any one of aspects 14, 15 and 19, including saving, for each eigenvector with a unique eigenvalue, only half of the elements in the LUT and obtaining the other half of the elements by (online) computation.

Aspect 21 is the method of aspect 20, wherein the online computation involves complex conjugate, reversing the order of the half of the elements of the eigenvector, and elements concatenation.

According to various examples, a "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be at least partially implemented by a transceiver which may for example be at least partially implemented by a modem (e.g. an LTE modem), a baseband processor or other transceiver components or also by an application processor. The communication device may for example be a communication terminal as such and may include typical communication terminal devices such as a transceiver (including e.g. a baseband processor, one or more filters, transmit chains, receive chains, amplifiers etc.), an antenna, a subscriber identity module, an application processor, a memory etc.

It should further be noted that the processor may be distributed, i.e. it may be implemented by two or even more physical devices such as cores or separate processing chips. In particular, in the example of figure 9, the processing of the one or more first neural network layers may be performed on a different device than the processing of the one or more second neural network layers (e.g. one device is a distributed unit while the other is a radio unit). Accordingly, the receiver does not need to be a single device but may be distributed over multiple (connected) devices.

The following examples pertain to further exemplary implementations.

Example 1 is a receiver, including a memory and a processor, the processor being configured to receive, for each of a plurality of receive antennas, a pilot signal via the receive antenna, wherein the pilot signal has a component for each subcarrier of a plurality of subcarriers, generate, for each of the plurality of receive antennas, an intermediate power delay profile estimation processing result by processing the pilot signal received via the receive antenna, the processing including combining the components of the pilot signal received via the receive antenna for the sub-carriers by one or more first neural network layers, generate a combined intermediate power delay profile estimation processing result by combining the intermediate power delay profile estimation processing results generated for the receive antennas and determine a power delay profile estimate by processing the combined intermediate power delay profile processing estimation result by one or more second neural network layers.

Example 2 is the receiver of example 1, wherein the wireless channel is an uplink channel or a downlink channel of a mobile communication system.

Example 3 is the receiver of example 1 or 2, wherein the processor is configured to generate the combined intermediate power delay profile estimation processing result by averaging or weighted averaging of the intermediate power delay profile estimation processing results generated for the receive antennas.

Example 4 is the receiver of any one of examples 1 to 3, wherein, for each receive antenna, the intermediate power delay profile estimation processing result of the receive antenna includes a value for each result component (e.g. a feature such as a value or value vector in a latent space) of a plurality of result components.

Example 5 is the receiver of example 4, wherein the processor is configured to generate the combined intermediate power delay profile estimation processing result by generating a component (e.g. a feature such as a value or value vector in a latent space) of the combined intermediate power delay profile estimation processing result for each result component of the plurality of result components (in other words, the combination over the receive antennas is performed per result component, e.g. each feature output (i.e. output node or channel)).

Example 6 is the receiver of example 4 or 5, wherein the one or more first neural network layers include a first neural network layer (which may be the single first neural network layer or the last of a sequence of first neural network layers) which includes one or more neurons for each result component of the plurality of result components and is configured to provide a value for the result component of the plurality of result components for each receive antenna (e.g. a set of first neurons provides values for all first components of the intermediate power delay profile estimation processing results of the receive antennas, a set of second neurons provides values for all first components of the intermediate power delay profile estimation processing results of the receive antennas etc.; here, a set of neurons may be a single neuron if it is configured to output a vector of values (having a value for each receive antenna for the respective component of the intermediate power delay profile estimation processing result)).

Example 7 is the receiver of example 6, Wherein each neuron includes an activation function.

Example 8 is the receiver of example 7, wherein the activation function is a rectifier linear unit.

Example 9 is the receiver of any one of examples 6 to 8, wherein the processor is configured to generate the combined intermediate power delay profile estimation processing result by combining, for each result component of the plurality of channels, the output values provided by the neurons of the one or more first neural networks over the receive antennas.

Example 10 is the receiver of any one of examples 1 to 9, wherein the plurality of results components includes at least one result component for each subcarrier of the plurality of subcarriers.

Example 11 is the receiver of any one of examples 1 to 10, wherein the receiver is a multiple input multiple output receiver.

Example 12 is the receiver of any one of examples 1 to 11, wherein the receiver is configured to generate the intermediate power delay profile estimation processing results for the receive antennas independently from each other (i.e., for example, if only the pilot signal received for one of the receive antennas changes but remains unchanged for the other receive antennas, only the intermediate power delay profile estimation processing result for that receive antenna changes).

Example 13 is a method for estimating a power delay profile of a wireless channel, including: receiving, for each of a plurality of receive antennas, a pilot signal via the receive antenna, wherein the pilot signal has a component for each subcarrier of a plurality of subcarriers, generating, for each of the plurality of receive antennas, an intermediate power delay profile estimation processing result by processing the pilot signal received via the receive antenna by one or more first neural network layers combining the components of the pilot signal received via the receive antenna for the sub-carriers, generating a combined intermediate power delay profile estimation processing result by combining the intermediate power delay profile estimation processing results generated for the receive antennas and determining a power delay profile estimate by processing the combined intermediate power delay profile processing estimation result by one or more second neural network layers.

Example 14 is a receiver, including a memory and a processor, the processor being configured to receive a pilot signal, estimate a power delay profile of the wireless channel from the received pilot signal, determine a power delay profile range to which the estimated power delay profile belongs from a plurality of power delay profile ranges, determine filter information associated with the determined range from a look-up table which associates each power delay profile range of the plurality of power delay profile ranges with respective filter information according to the determined power delay profile range and filter the pilot signal according to the determined filter information.

Example 15 is the receiver of example 14, wherein the look-up table contains, for each power delay profile range of the plurality of power delay profile ranges, the respective filter information.

Example 16 is the receiver of example 15, wherein the look-up table contains respective filter information for each power delay profile range of the plurality of power delay profile ranges and for each signal-to-noise ratio range of a plurality of signal-to-noise ratio ranges.

Example 17 is the receiver of example 15, wherein the processor is configured to determine a signal-to-noise ratio of the pilot signal, determine a signal-to-noise ratio range to which the determined signal-to-noise ratio of the pilot signal belongs from the plurality of signal-to-noise ratio ranges and determine the filter information from the look-up table according to the determined signal-to-noise ratio range and the determined power delay profile range.

Example 18 is the receiver of example 14, wherein the look-up table contains, for each power delay profile range of the plurality of power delay profile ranges, eigenvalues and eigenvectors of a channel correlation matrix.

Example 19 is the receiver of any one of examples 14 to 18, wherein the filter information includes filter coefficients.

Example 20 is the receiver of any one of examples 14 to 19, wherein the plurality of power delay profile ranges clusters (i.e. groups) possible power delay profile ranges in delay domain and power domain.

Example 21 is the receiver of any one of examples 14 to 20, wherein the processor is configured to determine the power delay profile range to which the estimated power delay profile belongs from the estimated power delay profile by down-sampling in delay domain and quantizing in power domain.

Example 22 is the receiver of example 20, wherein the processor is configured to determine the power delay profile range to which the estimated power delay profile belongs by down-sampling the estimated power delay profile in delay domain and afterwards quantizing the down-sampled estimated power delay profile in power domain.

Example 23 is the receiver of any one of examples 14 to 22, wherein the plurality of power delay profile ranges clusters (i.e. groups) power delay profiles which are reflected versions one of the other in delay domain.

Example 24 is the receiver of any one of examples 14 to 23, wherein the look-up table is stored in the memory.

Example 25 is a method for channel estimation of a wireless channel, including receiving a pilot signal, estimating a power delay profile of the wireless channel from the received pilot signal, determining a power delay profile range to which the estimated power delay profile belongs from a plurality of power delay profile ranges, determining filter information associated with the determined range from a look-up table which associates each power delay profile range of the plurality of power delay profile ranges with respective filter information according to the determined power delay profile range and filtering the pilot signal according to the determined filter information.

Example 26 is the method of example 25, including estimating the power delay profile according to example 13.

Example 27 is a receiver according to any one of examples 1 to 12 and according to any one of examples 14 to 24.

It should be noted that one or more of the features of any of the examples above may be combined with any one of the other examples. In particular, features described in context of one of the receivers are analogously valid for the corresponding method (i.e. the method for estimating a power delay profile of a wireless channel the method for channel estimation of a wireless channel).

According to further examples, a computer readable medium and a computer program element are provided comprising instructions which, when executed by a processor, make the processor perform at least one of the provided methods.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1. A receiver, comprising:
   a memory and a processor, the processor being configured to:

   receive, for each of a plurality of receive antennas, a pilot signal via the receive antenna, wherein the pilot signal has a component for each subcarrier of a plurality of subcarriers;
   generate, for each of the plurality of receive antennas, an intermediate power delay profile estimation processing result by processing the pilot signal received via the receive antenna, the processing comprising combining the components of the pilot signal received via the receive antenna for the sub-carriers by one or more first neural network layers;
   generate a combined intermediate power delay profile estimation processing result by combining the intermediate power delay profile estimation processing results generated for the receive antennas; and
   determine a power delay profile estimate by processing the combined intermediate power delay profile processing estimation result by one or more second neural network layers.

2. The receiver of claim 1, wherein the wireless channel is an uplink channel or a downlink channel of a mobile communication system.

3. The receiver of claim 1 or 2, wherein the processor is configured to generate the combined intermediate power delay profile estimation processing result by averaging or weighted averaging of the intermediate power delay profile estimation processing results generated for the receive antennas.

4. The receiver of any one of claims 1 to 3, wherein, for each receive antenna, the intermediate power delay profile estimation processing result of the receive antenna comprises a value for each result component of a plurality of result components.

5. The receiver of claim 4, wherein the processor is configured to generate the combined intermediate power delay profile estimation processing result by generating a component of the combined intermediate power delay profile estimation processing result for each result component of the plurality of result components.

6. The receiver of claim 4 or 5, wherein the one or more first neural network layers comprise a first neural network layer which comprises one or more neurons for each result component of the plurality of result components and is configured to provide a value for the result component of the plurality of result components for each receive antenna.

7. The receiver of claim 6, Wherein each neuron comprises an activation function.

8. The receiver of claim 7, wherein the activation function is a rectifier linear unit.

9. The receiver of any one of claims 6 to 8, wherein the processor is configured to generate the combined intermediate power delay profile estimation processing result by combining, for each result component of the plurality of channels, the output values provided by the neurons of the one or more first neural networks over the receive antennas.

10. The receiver of any one of claims 1 to 9, wherein the plurality of results components comprises at least one result component for each subcarrier of the plurality of subcarriers.

11. The receiver of any one of claims 1 to 10, wherein the receiver is a multiple input multiple output receiver.

12. The receiver of any one of claims 1 to 11, wherein the receiver is configured to generate the intermediate power delay profile estimation processing results for the receive antennas independently from each other.

13. A method for estimating a power delay profile of a wireless channel, comprising:

receiving, for each of a plurality of receive antennas, a pilot signal via the receive antenna, wherein the pilot signal has a component for each subcarrier of a plurality of subcarriers;
generating, for each of the plurality of receive antennas, an intermediate power delay profile estimation processing result by processing the pilot signal received via the receive antenna by one or more first neural network layers combining the components of the pilot signal received via the receive antenna for the sub-carriers;
generating a combined intermediate power delay profile estimation processing result by combining the intermediate power delay profile estimation processing results generated for the receive antennas; and
determining a power delay profile estimate by processing the combined intermediate power delay profile processing estimation result by one or more second neural network layers.

14. The method of claim 13, wherein the wireless channel is an uplink channel or a downlink channel of a mobile communication system.

15. The method of claim 13 or 14, comprising generating the combined intermediate power delay profile estimation processing result by averaging or weighted averaging of the intermediate power delay profile estimation processing results generated for the receive antennas.

# FIG 1

EP 4 672 642 A1

# FIG 2

$$200$$

$\hat{H}: 1 \times N_{sc}$

$W_1$    $B_1$  204    $W_2$    $B_2$    $W_3$    $B_3$  206

Relu    Relu    Softmax    208

Relu    Relu    $PDP$

204    $W_4$    $B_4$  207

Relu    Relu    Threshold

204

Input Layer    First Dense Layer    Second Dense Layer    Output Layers

201    203    205

EP 4 672 642 A1

FIG 3

$\widehat{H}: N \times N_{sc}$

300

Input Layer

First Dense Layer 303

Relu 304

1/N Σ 309

Second Dense Layer 305

Relu

$W_1$  $B_1$  $W_2$  $B_2$  $W_3$

306 $B_3$

Softmax

308

Threshold

PDP

307 $B_4$

Output Layers

$W_4$

One inference in the rest of the layers

N inferences in the first dense layer

# FIG 4

(a)

Channel estimation (Design I)

$Y$

$X$

407

$\widehat{SNR}$

SNR quantization

$\widehat{p}$

PDP clustering

LUT

LMMSE channel estimate

$\widehat{H}$

405

401

403

(b)

Channel estimation (Design II)

$Y$

$X$

$\widehat{SNR}$

$\widehat{p}$

PDP clustering

LUT

LMMSE channel estimate

$\widehat{H}$

406

402

404

# FIG 5

**500**

**PDP clustering**

$\hat{p}$ (a) → **501** Downsampling in delay domain → (b) → **502** Quantization in power domain → (c) → **503** Normalization → **504** Reflecting in delay domain → (d) → Clustered PDP

505 506 507 508 509 510 511 512

(a)  (b)  (c)  (d)

EP 4 672 642 A1

FIG 6

**FIG 7**

$$u(2) = u^*(11) \qquad u(1) = u^*(12)$$

EP 4 672 642 A1

FIG 8

EP 4 672 642 A1

# FIG 9

900

901

Receive, for each of a plurality of receive antennas, a pilot signal over the receive antenna, wherein the pilot signal has a component for each subcarrier of a plurality of subcarriers

902

Generate, for each of the plurality of receive antennas, an intermediate power delay profile estimation processing result by processing the pilot signal received via the receive antenna by one or more first neural network layers combining the components of the pilot signal received via the receive antenna for the sub-carriers

903

Generate a combined intermediate power delay profile estimation processing result by combining the intermediate power delay profile estimation processing results generated for the receive antennas

904

Determine a power delay profile estimate by processing the combined intermediate power delay profile processing estimation result by one or more second neural network layers

# FIG 10

1000

1001

Receive a pilot signal

1002

Estimate a power delay profile of the wireless channel from the received pilot signal

1003

Determine a power delay profile range to which the estimated power delay profile belongs from a plurality of power delay profile ranges

1004

Determine filter information associated with the determined range from a look-up table which associates each power delay profile range of the plurality of power delay profile ranges with respective filter information according to the determined power delay profile range

1005

Filter the pilot signal according to the determined filter information

| Europäisches Patentamt<br>European Patent Office<br>Office européen des brevets | **EUROPEAN SEARCH REPORT** | **Application Number**<br>**EP 24 18 4943** |
|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | CN 111 555 992 A (UNIV XIAMEN)<br>18 August 2020 (2020-08-18)<br>* paragraph [0004] - paragraph [0009] *<br>* paragraph [0015] - paragraph [0016] *<br>* paragraph [0020] *<br>----- | 1-15 | INV.<br>H04B17/318<br>H04L5/00<br>H04B7/08<br>H04L25/02 |
| A | WO 2023/150929 A1 (APPLE INC [US]; ZHANG YUSHU [CN]) 17 August 2023 (2023-08-17)<br>* paragraph [0093] - paragraph [0096] *<br>----- | 1-15 | |
| X | CA 2 945 375 C (ALTIOSTAR NETWORKS INC [US]) 18 October 2022 (2022-10-18)<br>* paragraph [0005] - paragraph [0006] *<br>----- | 1-15 | |
| X | PRIYANKA B LOHINI ET AL: "MIMO-OFDM channel estimation using distributed compressed sensing",<br>2014 IEEE INTERNATIONAL CONFERENCE ON COMPUTATIONAL INTELLIGENCE AND COMPUTING RESEARCH, IEEE,<br>18 December 2014 (2014-12-18), pages 1-4,<br>XP033197226,<br>DOI: 10.1109/ICCIC.2014.7238317<br>ISBN: 978-1-4799-3974-9<br>[retrieved on 2015-09-02]<br>* section III.B;<br>page 2, column 2, paragraph 5 *<br>----- | 1-15 | TECHNICAL FIELDS<br>SEARCHED (IPC)<br><br>H04B<br>H04L |

The present search report has been drawn up for all claims

| Place of search | Date of completion of the search | Examiner |
|---|---|---|
| The Hague | 25 November 2024 | Sklavos, Alexandros |

**ANNEX TO THE EUROPEAN SEARCH REPORT
ON EUROPEAN PATENT APPLICATION NO.**

EP 24 18 4943

25-11-2024

| Patent document cited in search report | | Publication date | Patent family member(s) | | Publication date |
|---|---|---|---|---|---|
| CN 111555992 | A | 18-08-2020 | NONE | | |
| WO 2023150929 | A1 | 17-08-2023 | CN | 118715843 A | 27-09-2024 |
| | | | WO | 2023150929 A1 | 17-08-2023 |
| CA 2945375 | C | 18-10-2022 | CA | 2945375 A1 | 15-10-2015 |
| | | | EP | 3130119 A1 | 15-02-2017 |
| | | | ES | 2821800 T3 | 27-04-2021 |
| | | | JP | 6612254 B2 | 27-11-2019 |
| | | | JP | 6858237 B2 | 14-04-2021 |
| | | | JP | 2017516383 A | 15-06-2017 |
| | | | JP | 2020043570 A | 19-03-2020 |
| | | | PT | 3130119 T | 28-09-2020 |
| | | | US | 2015295733 A1 | 15-10-2015 |
| | | | WO | 2015157293 A1 | 15-10-2015 |

EPO FORM P0459